# EUROPÄISCHE PATENTANMELDUNG

(11) **EP 2 332 688 A1**
(43) Veröffentlichungstag der Anmeldung: **15.06.2011**
(21) Anmeldenummer: 09405218.0
(22) Anmeldetag: 08.12.2009
(51) Int. Cl.: B23K 26/38

(54) **Verfahren zum Herstellen eines magnetisierbaren Körpers**

(71) Anmelder: LCD Laser Cut AG, 5026 Densbüren (CH)
(72) Erfinder: Pasquarella, Giuseppe Sebastiano, 8156 Oberhasli (CH)
(74) Vertreter: Roshardt, Werner Alfred

(57) **Zusammenfassung**

Ein Verfahren zum Herstellen eines magnetisierbaren Körpers, insbesondere eines magnetisierbaren Metallblech-Formstücks (30) für einen Stator oder Rotor einer elektrischen Maschine, nutzt gezielt und selektiv die Verschlechterung der Materialeigenschaften durch das Laserschneiden. Es wird eine Kontur mit mindestens zwei Schnittkanten durch den Laser (23) hergestellt, wobei mindestens eine erste Schnittkante am Metallblech-Rohling (11) durch den Laserstrahl (23) mit einem ersten Schneidparametersatz und mindestens eine zweite Schnittkante am Metallblech-Rohling (11) durch den Laserstrahl (23) mit einem zweiten Schneidparametersatz angebracht wird. Erfindungsgemäss sind der erste und zweite Schneidparametersatz voneinander verschieden und erzeugen an der ersten bzw. zweiten Schnittkante einen unterschiedlichen Energieeintrag. Mit diesem Verfahren könnten die Konturen eines Materialstegs (33.1 - 33.3) derart erzeugt werden, dass der Magnetfluss innerhalb des Stegs (33.1 - 33.3) minimiert wird.

## Beschreibung

### Technisches Gebiet

Die Erfindung betrifft ein Verfahren zum Herstellen eines magnetisierbaren Körpers, insbesondere eines Stators oder Rotors einer elektrischen Maschine, wobei der Körper mindestens ein magnetisierbares Metallblech-Formstück aufweist. Weiter bezieht sich die Erfindung auf eine Vorrichtung zum Durchführen des Verfahrens und auf ein Steuerprogramm-Produkt sowie ein nach dem Verfahren hergestelltes Metallblech-Formstück.

### Stand der Technik

Es ist bekannt, dass die Bearbeitung von Metallen deren magnetische Eigenschaften (Leitfähigkeit des Magnetflusses) verschlechtern kann.

Aus der US 2001/011,855 (Mannesmann Sachs) ist ein elektromagneto-mechanischer Konverter mit Windungszähnen bekannt. Die Windungszähne bestehen aus einem Material, welches das Anlegen eines magnetischen Flusses und/oder Feldes erlaubt. Der Konverter besteht aus einem kreisförmigen Kragen, in welchen die Windungszähne eingesteckt werden. Der Windungszahn besitzt eine flussleitende Zone sowie daran angrenzend eine Befestigungszone, um den Windungszahn am Kragen zu befestigen. Die Befestigungszone weist aufgrund lokaler Veränderungen in der Struktur einen höheren magnetischen Widerstand auf als die angrenzenden Zonen.

Das Stanzen eines individuellen Elementes aus z. B. einer Platte magnetischen Stahls resultiert in beträchtlichen Schäden an dessen Rändern. Die Breite dieser beschädigten Randzone beträgt ungefähr ein bis zwei Schichtdicken der Platte. Die relative Permeabilität dieser beschädigten Randzone ist reduziert, woraus sich ein erhöhter magnetischer Widerstand ergibt. Des Weiteren steigen die Hystereseverluste.

Der Weg des magnetischen Flusses in der flussleitenden Zone 33 ist durch Änderungen der strukturellen Eigenschaften des Windungszahnmaterials willentlich beeinflussbar. Lokale Änderungen der Materialeigenschaften können auf verschiedene Weise erfolgen. Dies kann gleichzeitig oder zeitlich unabhängig von der Ausformung eines Windungszahnes (oder dessen Einzelteile, z. B. dessen einzelner Schichten) geschehen. Die Kontur eines Windungszahnes kann solchermassen gestaltet werden, dass während dessen Ausformungsprozesses beispielsweise durch Stanzen, Wasserstrahlschneiden, Laserschneiden oder ähnliche Methoden, die strukturellen Eigenschaften des Materials der Befestigungszone stärker verändert werden als in der flussleitenden Zone. Die strukturellen Veränderungen können auch nach der Ausformung eines Elementes erfolgen, wobei dies mittels bekannter Methoden und insbesondere Laserbestrahlung oder Beschuss mit Partikeln (z. B. Elektronenbeschuss) geschehen kann.

Es sind auch schon Verfahren bekannt, um eine Metalloberfläche in ihrer magnetischen Eigenschaft zu verändern. Die D2 CA 1,263,160 C (Westinghouse Electric) beschreibt z. B. eine "Schreibtechnik" (scribing technique), bei welcher Metallplatten per Laser bearbeitet werden. Wird kornorientiertes Elektroblech auf verschiedene Weise transversal zur Kornrichtung "beschrieben", können auf demselben Blech verschiedene magnetische Eigenschaften produziert werden. Ein Laserstrahl überstreicht wiederholt ein isoliert beschichtetes ferromagnetisches Blech transversal zur Walzrichtung des Blechs. Dadurch wird die Grösse der magnetischen Domänen dieses Blechs verändert. Der Überstreichvorgang des Laserstrahls ist durch folgende Parameter charakterisiert: Geometrie des Laserlicht-Punktes, Dimension des Laserlicht-Punktes auf der Blechoberfläche, Stärke des auftreffenden Laserstrahls sowie Geschwindigkeit des Überstreichvorgangs. Wird einer oder mehrere dieser Parameter auf kontrollierte Art variiert, können an ausgewählten Positionen des Blechs kontrolliert Unterschiede in der Permeabilität von Wechselstromspitzen produziert werden. Diese Permeabilitätsunterschiede werden vorzugsweise so ausgebildet, dass Eisenverluste verbessert werden.

### Darstellung der Erfindung

Aufgabe der Erfindung ist es, ein dem Eingangs genannten technischen Gebiet zugehörendes Verfahren zu schaffen, welches zum Schneiden von Metallplatten mittels eines Laserstrahls geeignet ist. Dabei sollen während des Schnittes die Materialeigenschaften einer Zone entlang der Schnittkante gezielt lokal verändert werden.

Die Lösung der Aufgabe ist durch die Merkmale des Anspruchs 1 definiert. Das erfindungsgemässe Verfahren erlaubt es, einen magnetisierbaren Körper herzustellen, insbesondere einen Stator oder Rotor einer elektrischen Maschine. Dabei weist der Körper mindestens ein magnetisierbares Metallblech-Formstück auf, welches durch die nachfolgenden Schritte erzeugt wird.

Zuerst wird ein Metallblech-Rohling bereitgestellt, aus welchem durch Erzeugung einer entsprechenden Kontur ein Metallblech-Formstück gefertigt wird. Dabei wird die Kontur durch mindestens eine erste Schnittkante am Metallblech-Rohling mittels eines Laserstrahls mit einem ersten Schneidparametersatz erzeugt. Danach wird mindestens eine zweite Schnittkante am Metallblech-Rohling durch den Laserstrahl mit einem zweiten Schneidparametersatz angebracht, wobei der erste und zweite Schneidparametersatz voneinander verschieden sind und an der ersten bzw. zweiten Schnittkante einen unterschiedlichen Energieeintrag erzeugen.

Während des Schnittes werden verschiedene Schneidparametersätze verwendet, welche den lokalen Energieeintrag an der Schnittkante bestimmen. Der Vorteil des erfindungsgemässen Verfahrens liegt darin, dass die dadurch variierende Stärke der lokalen strukturellen Veränderungen und die ebenfalls variierende Breite der strukturell veränderten Zone entlang der Schnittkante gezielt dazu eingesetzt werden können, die Materialeigenschaften des Metallblech-Formstücks, während des Schnittes einer bestimmten Vorgabe (welche sich aus der beabsichtigten Verwendung des Metallblech-Rohlings ergibt) entsprechend lokal anzupassen.

So kann beispielsweise die magnetische Permeabilität entlang der Schnittkante lokal variiert werden. In Verbindung mit weiteren Faktoren wie z. B. der geeigneten Wahl einer geometrischen Form lassen sich so etwa während des Schnittes auf demselben Metallblech-Formstück Bereiche mit hoher und tiefer Leitfähigkeit für Magnetfelder ausbilden. Dies kann dazu benutzt werden, Magnetflüsse gezielt zu steuern. Die an sich grundsätzlich als nachteilig betrachtete Verschlechterung der Magnetfluss-Leitungsfähigkeit entlang der Schnittkante, welche üblicherweise so stark wie möglich minimiert wird, kann so vorteilhaft benutzt werden.

Insbesondere kann mit dem erfindungsgemässen Verfahren ein besonders effizienter Stator oder Rotor einer elektrischen Maschine hergestellt werden. Bei der Herstellung eines Stators oder Rotors können in Metallbleche Öffnungen geschnitten werden, in welche z. B. Magnete und/oder elektrische Leiter eingeführt werden oder welche leer bleiben (d. h. mit Luft gefüllt sind). Auf diese Weise lässt sich der Magnetfluss der Metallbleche und dadurch der Magnetfluss in und um den Stator oder Rotor beeinflussen. Allerdings müssen beim Schneiden dieser Öffnungen aus mechanischen Gründen Stege ausgestaltet werden. Diese Stege erlauben dem Magnetfeld jedoch eine weitere Ausbreitung, und es entstehen sogenannte Streupfade. Während des Schnittes der Öffnungen können die Schneidparametersätze nun erfindungsgemäss derart angepasst werden, dass genau diese Stege mit einer verschlechterten Magnetflussleitfähigkeit versehen werden. So können Streupfade beeinflusst werden.

Eine andere besonders vorteilhafte Anwendung des erfindungsgemässen Verfahrens ist z. B. die Möglichkeit, dünne Stege, Streben oder Verbindungen mit einer verschlechterten Magnetflussfähigkeit zu versehen und an Stellen auszuformen, wo sie zuvor wegen der Bildung eines Streupfads nicht eingesetzt werden konnten. So kann man beispielsweise Nuten durch umschlossene Öffnungen ersetzen oder Einbuchtungen verschliessen. Dies kann unter Anderem zu einem grossen aerodynamischen Vorteil führen und z. B. Lärmemissionen reduzieren bzw. verhindern und/oder eine Effizienzsteigerung bewirken.

Strukturelle Veränderungen und damit eine Annpassung der lokalen Materialeigenschaften lassen sich am Formteil auch vorgängig oder nachträglich vornehmen, allerdings ist dazu ein zusätzlicher Arbeitsschritt nötig. Der grosse Vorteil des erfindungsgemässen Verfahrens liegt darin, dass die Anpassung der lokalen Materialeigenschaften während des Schnittprozesses stattfindet und dadurch Zeit und Kosten gespart werden.

Bevorzugt ist der Energieeintrag der zweiten Schnittkante mindestens 20%, insbesondere 100% grösser als der Energieeintrag der ersten Schnittkante.

Dadurch werden substanzielle Variationen in den lokalen magnetischen Eigenschaften des Metallblechs erreicht. An der zweiten Schnittkante wird also deutlich mehr Energie eingetragen, und die Materialeigenschaften sind signifikant unterschiedlich zu denjenigen der ersten Schnittkante.

Alternativ kann der Unterschied der beiden Energieeinträge auch kleiner als 20% sein, wobei dann in vielen Fällen nur kaum messbare Veränderungen der Materialeigenschaften hervorgerufen werden. Der Unterschied der beiden Energieeinträge kann auch mehr als 100% betragen, aber nicht beliebig gesteigert werden.

Insbesondere werden zwei zweite Schnittkanten hergestellt, welche einen Materialsteg begrenzen.

Somit wird in den Materialsteg von beiden Seiten viel Energie eingetragen. Daraus ergibt sich, dass die Materialeigenschaften des Materialstegs zu einem relativ grossen Teil von den strukturellen Veränderungen durch das Schneideverfahren abhängig sind. So kann z. B. ein Steg derart beeinflusst werden, dass die Magnetfluss-Leiteigenschaften weitgehend verschwinden.

Alternativ kann auch eine von drei oder mehreren zweiten Schnittkanten begrenzte Form ausgebildet werden.

Mit Vorteil weisen die beiden zweiten Schnittkanten des Materialstegs einen minimalen Abstand von weniger als 3 mm auf.

Derartig dünne Materialstege können bei der Anwendung geeigneter Schneidparametersätze vollständig und durchgehend in ihren Materialeigenschaften verändert werden. Solche erfindungsgemäss modifizierten Materialstege eignen sich z. B. zur Elimination von Streubrücken oder können als zusätzliche Elemente an Stellen eingesetzt werden, wo Materialstege mit unveränderten Materialeigenschaften aus funktionalen Gründen nicht ausgebildet werden konnten. Beides kann zu mannigfaltigen Vorteilen führen, wie z. B. gezielt manipulierbaren Magnetflüssen, vorteilhafteren mechanischen Eigenschaften, besserer Aerodynamik, niedrigeren Geräuschemissionen oder höherer Effizienz von Elektromotoren.

Der Materialsteg kann hingegen auch breiter als 3 mm ausgestaltet werden, wobei aber mit zunehmender Breite der Einfluss der strukturellen Veränderungen des Bereichs um die Schnittkante in Bezug zu den Materialeigenschaften des Materialstegs abnimmt.

Besonders geeignet sind Bereiche in den Formstücken, wo die erste und die zweite Schnittkante zusammenstossen und dabei eine Ecke bilden. Die Änderung der Schnittparameter erfolgt also nicht im Verlauf einer geraden oder bogenförmigen Schnittkante, sondern an einer Ecke der geometrischen Form (z. B. an einer Ecke des Steges).

Ecken einer solchen Ausbildung sind besonders dann vorteilhaft, wenn eine Seite der Ecke anderen Ansprüchen gerecht werden muss als die andere. Es kann sich dabei um alle beeinflussbaren Materialeigenschaften handeln wie z. B. mechanische, elektromagnetische oder optische. Der Vorteil des erfindungsgemässen Verfahrens ist die grosse Flexibilität bezüglich der lokalen Anpassung der Materialeigenschaften des Formteils.

Alternativ kann eine Ecke auch aus Schnittkanten gleicher Art bestehen, oder die Schnittkanten, deren Schnittparameter unterschiedlich sind, treffen an beliebigen Stellen wie z. B. in Geraden oder konvexen oder konkaven Formen aufeinander.

Es hat sich als zweckdienlich erwiesen, dass der Schneidparametersatz eine Strahlleistung, eine Leistungsfrequenz, eine Schnittgeschwindigkeit und/oder eine Kühlleistung beinhaltet.

Ein die obigen Elemente umfassender Schneidparametersatz kann den Energieeintrag besonders gut optimieren, da eine grosse Auswahl an Freiheitsgraden zur Verfügung steht. Unter Leistungsfrequenz versteht man dabei die Pulsfrequenz eines gepulsten Laserstrahls, und die Kühlleistung wird typischerweise über eine Variation des Gasdrucks geregelt.

Alternativ können auch weniger Parameter variiert werden, wobei sich aber die Optimierung einer Materialeigenschaft unter Umständen nicht mehr ohne Einbussen bei einer oder mehreren anderen Materialeigenschaften ausführen lässt.

Es ist auch möglich, weitere Parameter, wie z. B. Polarisierung und Wellenlänge des Laserstrahls, die Sorte des Schutzgases, den Fokusdurchmesser oder andere, mit in den Schneidparametersatz aufzunehmen. Dies eröffnet weitere Freiheitsgrade und kann zur zusätzlichen Optimierung der Veränderung der lokalen Materialeigenschaften beitragen.

Bevorzugt beträgt die Dicke des bereitgestellten Metallblech-Rohlings weniger als 2 mm, insbesondere weniger als 1 mm.

Eine Dicke von weniger als 2 mm erweist sich darum als besonders vorteilhaft, weil der Energieeintrag auf der ganzen Dicke der Schnittkante gleichmässig erfolgt und daher die strukturellen Veränderungen und damit auch die Materialeigenschaften sehr gleichmässig ausgestaltet sind.

Der Metallblech-Rohling kann auch 2 mm oder dicker sein, dabei ist aber in Betracht zu ziehen, dass die für einen Schnitt nötige Energie bereits meist recht hoch ist. Weil es für jedes Material eine spezifische obere Energiemenge gibt, welche in einem bestimmten Schnittverfahren ohne Entstehung von Nachteilen eingesetzt werden kann, wird somit der Spielraum für eine Schneidparametersatzoptimierung kleiner.

Weiter können bei Metallblech-Rohlingen mit Dicken ab 2 mm die Energieeinträge an der Schnittkante entlang der Dicke ungleichmässig ausfallen. Die dadurch auftretenden Variationen der Materialeigenschaften sind häufig von Nachteil.

Mit Vorteil werden mehrere Metallblech-Formstücke zu einem Blechstapel zusammengefügt, so dass ein Körper von beliebiger Dicke entstehen kann, welcher auf der ganzen Dicke über die Materialeigenschaften verfügt, die durch das erfindungsgemässe Schnittverfahren gezielt hervorgerufen worden sind. Mit zunehmender Dicke wird es schwieriger oder unmöglich, den Energieeintrag an der Schnittkante gleichmässig zu verteilen. Es gibt auch eine Obergrenze für die Dicke, über welcher sich das Laserschneidverfahren nicht mehr ohne grössere Nachteile einsetzen lässt. Durch die Bearbeitung von vielen dünnen einzelnen Formstücken werden diese Probleme umgangen und es können beliebig dicke Körper mit den optimierten Materialeigenschaften hergestellt werden.

Die Vorrichtung zum Durchführen des Verfahrens nach Anspruch 1 umfasst eine Laserstrahl-Schneidmaschine mit einer Steuereinheit zum Steuern von Schneidparametern und eine Verschiebeeinrichtung, um den Laserstrahl relativ zum Metallblech-Rohling zwecks Herstellung einer Schnittkante verschieben zu können. Die Vorrichtung ist dadurch gekennzeichnet, dass die Steuereinheit ausgebildet ist, um eine dem Metallblech-Formstück entsprechende Kontur zu erzeugen, indem mindestens eine erste Schnittkante am Metallblech-Rohling durch den Laserstrahl mit einem ersten Schneidparametersatz und mindestens eine zweite Schnittkante am Metallblech-Rohling durch den Laserstrahl mit einem zweiten Schneidparametersatz angebracht wird. Dabei sind der erste und zweite Schneidparametersatz voneinander verschieden und erzeugen an der ersten bzw. zweiten Schnittkante einen unterschiedlichen Energieeintrag.

Die Vorrichtung erlaubt die Anwendung des erfindungsgemässen Verfahrens und ist dazu vorgesehen, alle nötigen Parameter im entsprechenden Rahmen variieren zu können. Unter Ausnutzung des gesamten Parameterraums des Schneidparametersatzes können so die Materialeigenschaften optimal beeinflusst werden.

Alternativ können auch handelsübliche Laserstrahl-Schneidmaschinen für den Einsatz des erfindungsgemässen Verfahrens benutzt werden, sofern die Parameter während des Schnittes entsprechend variiert werden können. Mit zunehmend eingeschränkter Parametervariation nehmen die Möglichkeiten der Optimierung der Materialeigenschaften ab.

Die Erfindung kann mit an sich bekannten Laserschneidmaschinen umgesetzt werden, sofern die Maschine es zulässt, dass die Schneidparameter während des Schneidens verändert werden. Es genügt dann ein Steuerungsprogramm-Produkt zum Durchführen des Verfahrens zur Verfügung zu stellen, welches sich dadurch kennzeichnet, dass es einen die Schneidparameter der Laserstrahl-Schneidmaschine steuernden ersten Datensatz verarbeitet, um durch den Laserstrahl eine erste Schnittkante an dem Metallblech-Rohling zu bilden, und mindestens einen die Schneidparameter der Laserstrahl-Schneidmaschine steuernden zweiten Datensatz verarbeitet, um durch den Laserstrahl eine zweite Schnittkante am Metallblech-Rohling zu bilden, wobei der erste und zweite Schneidparametersatz voneinander verschieden sind und an der ersten bzw. zweiten Schnittkante einen unterschiedlichen Energieeintrag erzeugen. Das Steuerungsprogramm-Produkt kann in dem Steuerungscomputer der Laserschneidmaschine geladen werden und führt dann das erfindungsgemässe Verfahren aus.

Bevorzugt wird ein Metallblech-Formstück nach Anspruch 1 hergestellt, mit mindestens einer ersten Schnittkante mit einem ersten veränderten Randbereich und mindestens einer zweiten Schnittkante mit einem zweiten veränderten Randbereich, wobei der erste und der zweite Randbereich hinsichtlich der elektromagnetischen Materialeigenschaften verschieden sind.

Der Unterschied in der elektromagnetischen Materialeigenschaft hat den Vorteil, dass elektromagnetische Felder und Flüsse gezielt gelenkt werden können. So ist es z. B. möglich, die Effizienz von Rotoren und Statoren in Elektromotoren zu optimieren, ohne zusätzliche Arbeitsschritte durchführen zu müssen.

Statt der elektromagnetischen kann auch jede andere Materialeigenschaft wie z. B. mechanische oder optische Eigenschaften durch das erfindungsgemässe Verfahren lokal verändert werden, wenn es einer Anwendung dienlich ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Metallplatte, welche von einem Laserstrahl unter Verwendung von drei verschiedenen Schneidparametersätzen geschnitten wird;
- Fig.2 2: eine Vorrichtung, welche den Einsatz des erfindungsgemässen Laserschneidverfahrens erlaubt;
- Fig. 3 a - d: ein nach dem erfindungsgemässen Verfahren hergestelltes Metallblech-Formstück;
- Fig. 4: einen Stapel von Metallblech-Formstücken.

Grundsätzlich sind in den Figuren gleiche Teile mit gleichen Bezugszeichen versehen.

### Wege zur Ausführung der Erfindung

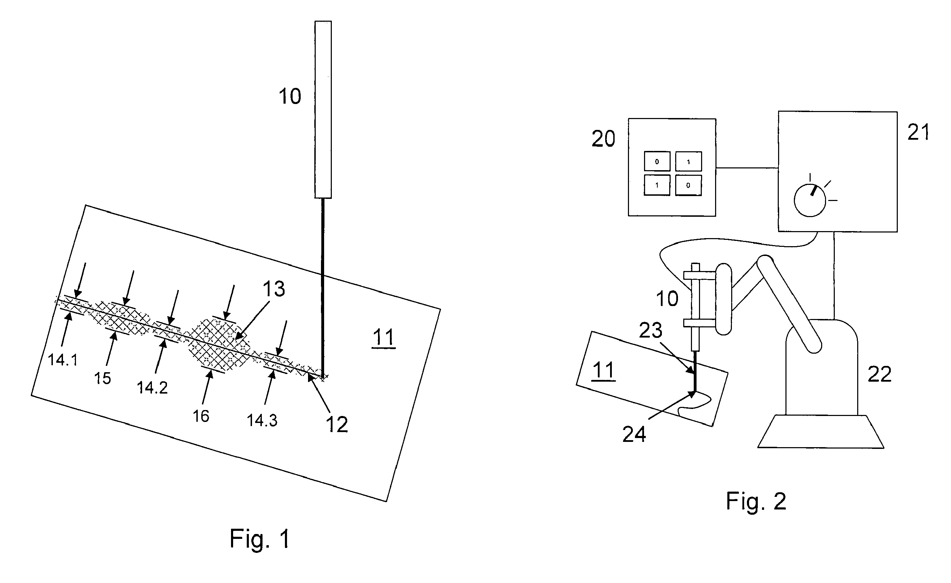

In Fig. 1 wird das erfindungsgemässe Verfahren schematisch dargestellt. Ein Laser 10 schneidet eine Metallplatte 11, wobei die Metallplatte 11 entlang einer Schnittkante 12 einen Energieeintrag erfährt. Der von dem Energieeintrag betroffene Bereich 13 um die Schnittkante 12 ist beispielhaft als grau schraffierte Zone dargestellt.

Wird der Schneidparametersatz erfindungsgemäss während des Schnittes variiert, verändert sich der Wärmeeintrag und auch die Breite des davon betroffenen Bereichs. In diesem in Fig. 1 dargestellten Beispiel wird von links nach rechts geschnitten. Wählt man einen ersten Schneidparametersatz S1 so, dass nur ein kleiner Energieeintrag stattfindet, dann ist die Breite des betroffenen Bereiches 14.1 entlang der Schnittkante 12 gering. Wird der Schnitt mit den Einstellungen eines Schneidparametersatzes S2 fortgesetzt, welcher einen grösseren Energieeintrag verursacht, dann wird der vom Energieeintrag betroffene Bereich 15 breiter als der Bereich 14.1. Der Wechsel zurück zum Schneidparametersatz S1 lässt die Breite des betroffenen Bereichs 14.2 wieder auf das vorherige Niveau abnehmen. Ein daraufhin folgender dritter Schneidparametersatz S3 verursacht einen grossen Energieeintrag und betrifft einen Bereich 16 von grosser Breite entlang der Schnittkante 12. Der danach erneut eingestellte Schneidparametersatz S1 lässt die Breite des betroffenen Bereichs 14.3 wieder auf das ursprüngliche geringe Mass verkleinern.

Fig. 1 illustriert die gezielt wählbare Breite des Gebiets um die Schnittkante 12, welches vom Energieeintrag betroffen wird. Die Materialeigenschaften in diesem betroffenen Gebiet werden durch den Energieeintrag bewusst und kontrolliert verändert. Darum können die Materialeigenschaften von Metallplatten entlang einer Schnittkante lokal einer Aufgabe angepasst werden.

Fig. 2 stellt ein Schema einer Vorrichtung dar, welche das erfindungsgemässe Verfahren anwenden kann.

Die Schneidparametersätze sind in einer Speichereinheit 20 gespeichert, welche von einer Steuereinheit 21 ausgelesen werden kann. Die Steuereinheit 21, welche typischerweise einen programmierbaren Computer umfasst, steuert eine (hier nur schematisch dargestellte) Verschiebevorrichtung 22, die einen Laserstrahl 23 relativ zu einer Metallplatte 11 (und insbesondere deren Schnittpunkt 24) zu bewegen vermag. Die Verschiebevorrichtung 22 und der Laser 10 verfügen über alle Freiheitsgrade, welche die Schneidparametersätze umfassen, insbesondere z. B. Strahlleistung, Leistungsfrequenz, Schnittgeschwindigkeit und/oder Kühlleistung. Die Anzahl der nötigen Freiheitsgrade und des nötigen Parameterbereichs hängt von der zu lösenden Aufgabe ab; die Höhe der Anforderungen an die Vorrichtung wird dabei durch die Wahl der zu verändernden Materialeigenschaft(en) bestimmt.

Unter Verwendung der in Fig. 2 dargestellten Vorrichtung kann die Metallplatte 11 mittels variabler Schneidparametersätze erfindungsgemäss derart geschnitten werden, dass die Materialeigenschaften im Bereich der Schnittkanten lokal gezielt wunschgemäss beeinflusst werden können.

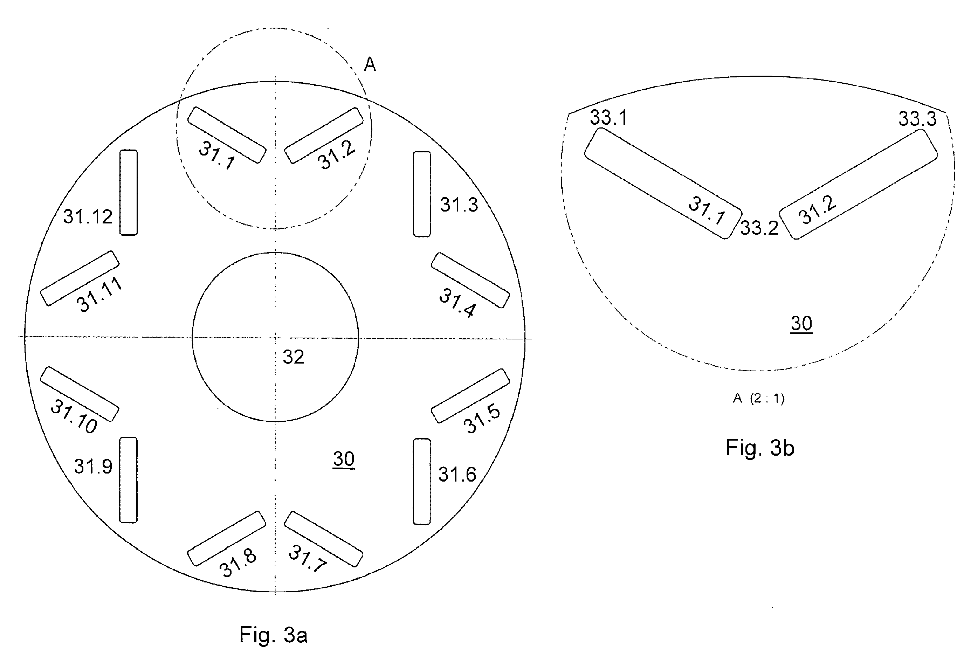

In Fig. 3a ist eine Ausführungsform eines erfindungsgemäss hergestellten Metallblech-Formstück abgebildet. Es handelt sich dabei um ein kreisrundes, etwa 1 mm dickes Dynamoblech 30, welches zwölf per Laser herausgeschnittene rechteckförmige Schlitze 31.1 - 31.12 aufweist. Der Durchmesser des Dynamoblechs liegt typischerweise zwischen 3 und 120 cm, aber kann auch mehrere Meter betragen. Die Längsseite der Schlitze 31.1 - 31.12 entspricht hier etwa einem Sechstel des Durchmessers des Dynamoblechs 30, und die kurze Seite der Schlitze 31.1 - 31.12 ist etwa ein Sechstel so lang wie die Längsseite.

Jeweils zwei der Schlitze 31.1 - 31.12 bilden eine funktionale Einheit und sind v-förmig angeordnet. Der Winkel zwischen den Schlitzen beträgt 120 Grad, und an der Spitze der v-Form werden die Schlitzpaare durch einen Abstand getrennt, der etwa einer kurzen Seite eines Schlitzes entspricht. Die beiden Schlitze 31.1 und 31.2 bilden z. B. eine dieser sechs funktionalen Einheiten, welche als Ausschnitt A durchbrochen markiert ist. Die Symmetrieachse jeder v-förmigen Einheit schneidet dabei den Mittelpunkt des Dynamoblechs 30, und die Spitze des v ist dem Mittelpunkt des Dynamoblechs 30 zugewandt. Die offene Seite des v befindet sich nahe am Rand des Dynamoblechs, und die ganze v-förmige Einheit liegt radial gesehen im äussersten Drittel der Dynamoblechscheibe 30.

Des Weiteren weist das Dynamoblech 30 in seiner Mitte eine konzentrische kreisrunde Öffnung 32 auf, deren Durchmesser ein Drittel des Durchmessers des Dynamoblechs 30 beträgt.

Fig. 3b zeigt eine Vergrösserung des Ausschnitts A, welcher in Fig. 3a durchbrochen markiert ist. Folgend wird anhand des Ausschnitts A gezeigt, was überall auf der Dynamoblechscheibe 30 in gleicher Art ausgestaltet ist.

Die Schlitze 31.1 und 31.2 und deren v-förmige Anordnung dienen dem Zweck, Magnetfelder lokal zu lenken. In dem hier vorliegenden Beispiel ist vorgesehen, Magnete in die Schlitze 31.1 und 31.2 einzuführen. Aus mechanischen Gründen müssen die Schlitze 31.1 und 31.2 so ausgestaltet sein, dass sich zwischen den Schlitzen 31.1, 31.2 und dem Rand des Dynamoblechs 30 kleine Stege 33.1 - 33.3 aus Dynamoblech 30 befinden. Diese Stege 33.1 - 33.3 bilden Streupfade, welche es den Magnetfeldern erlaubt, Streufelder auszubilden.

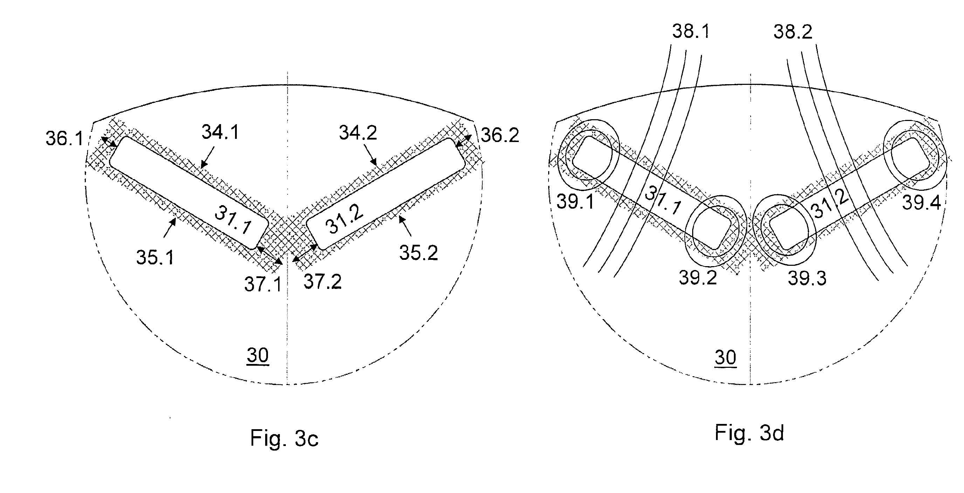

Fig.3c stellt denselben Ausschnitt A aus Fig. 3a dar, der schon in Fig. 3b gezeigt wurde. Hier sind allerdings zusätzlich noch diejenigen Bereiche entlang der Schnittkanten der Schlitze 31.1 und 31.2 schraffiert, welche durch das erfindungsgemässe Laserschneidverfahren mit einem der Aufgabe angepassten variablen Energieeintrag versehen worden sind. Durch den Energieeintrag sind die lokalen Materialeigenschaften des betroffenen schraffierten Bereichs derart verändert worden, dass sie Màgnetfelder verschlechtert leiten. Dadurch sollen die Stege 33.1 - 33.3 von ihrer negativen Funktion als Streupfade befreit werden.

Entlang der Längsseiten der Schlitze 31.1 und 31.2 kann der Energieeintrag klein gehalten oder sogar minimiert werden, da Magnete in die Schlitze 31.1 und 31.2 eingeführt werden und die Magnetfelder entlang der Längsseiten erwünscht sind. Aus diesem Grund konnte beim Schneiden der Längskanten ein Schneidparametersatz S 1 verwendet werden, der die Breiten der betroffenen Gebiete 34.1, 34.2, 35.1 und 35.2 relativ klein hält.

Um die Streupfade entlang der Stege 33.1 und 33.3 (siehe Fig. 3b) am Dynamoblechrand zu beeinflussen, kann ein zweiter Schneidparametersatz S2 zum Schneiden der kurzen Kanten der Schlitze 31.1 und 31.2 verwendet werden, wodurch die Breite der betroffenen Gebiete 36.1 und 36.2 vergrössert wird. Magnetfelder können durch derart hergestellte Stege 33.1 und 33.3 nur noch erschwert oder gar nicht mehr durchdringen. Dasselbe gilt für den Steg 33.2 zwischen den beiden Schlitzen 31.1 und 31.2, wobei beim Schneiden der entsprechenden kurzen Kanten ein dritter Schneidparametersatz zum Einsatz kommen kann, welcher für eine besonders grosse Breite der betroffenen Gebiete 37.1 und 37.2 sorgt.

Fig. 3d zeigt denselben Ausschnitt A aus Fig. 3a, der schon in Fig. 3c gezeigt wurde. Die schraffierten Gebiete bezeichnen die Teile des Dynamoblechs 30, der durch gezielten Energieeintrag in seinen magnetischen Leitfähigkeiten verschlechtert worden ist. Werden wie vorgesehen Magnete in die Schlitze 31.1 und 31.2 eingeführt, entstehen Magnetfelder, welche in Fig. 3d sinngemäss und unvollständig durch schematisch eingezeichnete Magnetfeldlinien dargestellt sind.

Die schematisch dargestellten Magnetfeldlinien des Hauptfelds 38.1 und 38.2 illustrieren den Verlauf des erwünschten Magnetfeldes entlang der Längsseiten der Schlitze 31.1 und 31.2. Um das entsprechende Magnetfeld möglichst wenig durch die verschlechterten elektromagnetischen Eigenschaften der Schnittkante zu beeinträchtigen, ist die Breite der betroffenen Gebiete 34.1, 34.2, 35.1 und 35.2 durch die Verwendung eines Schneidparametersatzes S1 bewusst klein gehalten worden.

Die schematisch dargestellten Magnetfeldlinien des Streufelds 39.1 bis 39.4 hingegen illustrieren den Verlauf der unerwünschten Streufelder an den Stegen 33.1 bis 33.3. Um die Streufelder möglichst stark abzuschwächen, ist die Breite der vom Wärmeeintrag betroffenen Gebiete 36.1, 36.2, 37.1 und 37.2 durch die Verwendung der Schneidparametersätze S2 und S3 gezielt vergrössert worden. Auf diese Weise kommen die unerwünschten Streufelder grossteils auf Teile des Dynamoblechs 30 zu liegen, welche verschlechterte elektromagnetische Materialeigenschaften aufweisen, wodurch die Streufelder abgeschwächt werden.

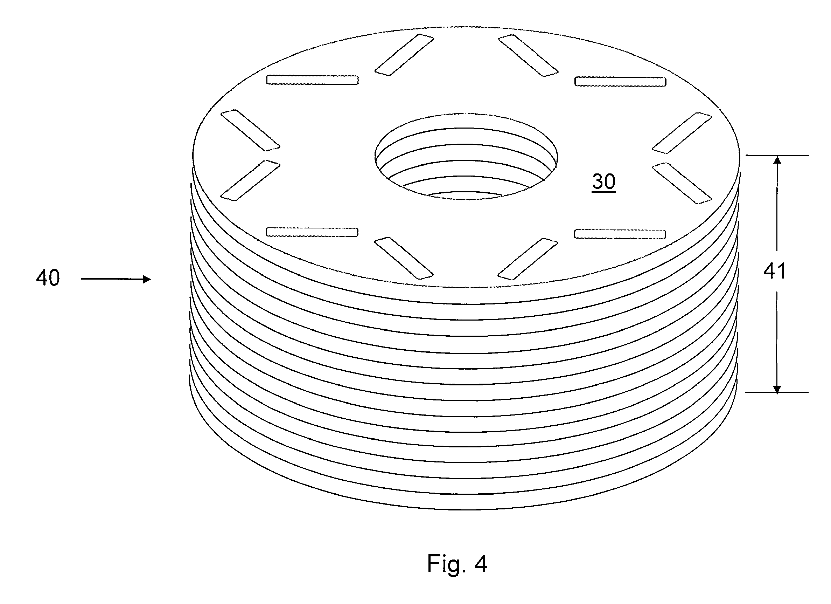

In Fig. 4 ist ein Stapel 40 der in den Fig. 3a - 3d beschriebenen Dynamobleche 30 dargestellt. Ein solcher Stapel 40 besteht aus typischerweise 10 bis 1000 Lagen und hat den Vorteil, dass dessen Materialeigenschaften entlang einer Stapelhöhe 41 durch die Vielzahl der aufeinandergeschichteten Dynamobleche 30 bestimmt werden.

Da die Dynamobleche 30 entlang ihrer Schnittkanten lokal gezielt beeinflusste magnetische Materialeigenschaften aufweisen, ist es möglich, die magnetischen Eigenschaften des ganzen Stapels 40 kontrolliert zu verändern. Körper einer der Stapelhöhe 41 entsprechenden Dicke können nur beschränkt oder gar nicht mit einem Laserschneidverfahren bearbeitet werden, und insbesondere fällt der Energieeintrag entlang der Schnittkante sehr ungleichmässig aus. Das gezielte Bearbeiten von einzelnen dünnen Lagen, welche daraufhin zusammengefügt werden, ermöglicht den Einsatz des erfindungsgemässen Verfahrens auch an Körpern von grosser Dicke.

Des Weiteren hat die Stapelbauweise den grossen Vorteil, dass im Falle der Konstruktion eines Rotors für Elektromotoren die einzelnen Dynamobleche 30 vor dem Zusammensetzen der einzelnen Lagen an den Scheibenoberflächen mit einer Isolationsschicht versehen werden können. Auf diese Art können elektromagnetische Wechselwirkungen in Richtung der Stapelhöhe 41 optimiert werden. Da die meisten gängigen Rotoren auf diese Weise aufgebaut sind, bietet sich der Einsatz des erfindungsgemässen Verfahrens auf diesem Gebiet besonders an.

Die beschriebenen Ausführungsformen sind lediglich als illustrative Beispiele zu verstehen, welche im Rahmen der Erfindung beliebig erweitert oder abgewandelt werden können.

Die in Fig. 2 beschriebene Verschiebevorrichtung 22 hat die Aufgabe, den Schnittpunkt 24 relativ zur Metallplatte 11 zu verschieben. Dies kann auf verschiedene Arten bewerkstelligt werden, so z. B. durch Verschieben oder Drehen des Lasers, Verschieben oder Drehen eines Lichtfaserleiters oder Verschieben oder Drehen von optischen Komponenten wie Spiegel, Linsen etc. Es kann beispielsweise aber auch die Metallplatte 11 bewegt oder ein Wasserstrahl gelenkt werden, wenn dieser den Laserstrahl transportiert. Andere Methoden, welche dasselbe Ziel erfüllen und sich steuern lassen, können ebenfalls im Rahmen der Erfindung verwendet werden.

In Fig. 3 wird ein Dynamoblech 30 gezeigt, welches über erfindungsgemäss herausgeschnittene Schlitze 31.1 - 31.12 lokale Bereiche von variierender magnetischer Leitfähigkeit definiert. Sowohl Blech als auch Schlitze können in Grösse und Form, die Schlitze zusätzlich auch noch in Anzahl und Anordnung variiert werden. In die Schlitze können z. B. Magnete und/oder elektrische Leiter eingeführt werden oder sie können auch leer bleiben bzw. mit Luft gefüllt als elektromagnetische Isolatoren dienen. Ebenso können andere Materialen wie Metalle, Kunststoffe, Wachse, ausgehärtete Schäume usw. in die Schlitze eingebracht werden, um durch deren spezifische elektromagnetischen Eigenschaften das Magnetfeld des Stators oder Rotors zu beeinflussen.

Es gibt eine Vielzahl von Möglichkeiten der Ausformung eines Dynamoblechs. Auch der in Fig. 4 illustrierte Stapel 40 stellt nur eine von unzähligen Varianten dar, welche sich in Form, Grösse und auch Funktion unterscheiden.

## Patentansprüche

1. Verfahren zum Herstellen eines magnetisierbaren Körpers, insbesondere eines Stators oder Rotors einer elektrischen Maschine, wobei der Körper mindestens ein magnetisierbares Metallblech-Formstück aufweist, welches durch folgende Schritte erzeugt wird:
a) Bereitstellen eines Metallblech-Rohlings; (11)
und zur Erzeugung einer dem Metallblech-Formstück entsprechende Kontur;
b) Anbringen mindestens einer ersten Schnittkante am Metallblech-Rohling (11) durch einen Laserstrahl (23) mit einem ersten Schneidparametersatz.
c) Anbringen mindestens einer zweiten Schnittkante am Metallblech-Rohling (12) durch den Laserstrahl (23) mit einem zweiten Schneidparametersatz,
d) wobei der erste und zweite Schneidparametersatz voneinander verschieden sind und an der ersten bzw. zweiten Schnittkante einen unterschiedlichen Energieeintrag erzeugen.

2. Verfahren nach Anspruch 1 **dadurch gekennzeichnet, dass** der Energieeintrag der zweiten Schnittkante mindestens 20%, insbesondere 100% grösser ist als der Energieeintrag der ersten Schnittkante.

3. Verfahren nach Anspruch 1 oder 2, **dadurch gekennzeichnet, dass** zwei zweite Schnittkanten hergestellt werden, welche einen Materialsteg (33.1 - 33.3) begrenzen.

4. Verfahren nach Anspruch 3, **dadurch gekennzeichnet, dass** die beiden zweiten Schnittkanten einen minimalen Abstand von weniger als 3 mm haben.

5. Verfahren nach einem der Ansprüche 1 bis 4, **dadurch gekennzeichnet, dass** die erste und die zweite Schnittkante zusammenstossen und dabei eine Ecke bilden.

6. Verfahren nach einem der Ansprüche 1 bis 5, **dadurch gekennzeichnet, dass** der Schneidparametersatz eine Strahlleistung, eine Leistungsfrequenz, eine Schnittgeschwindigkeit und/oder eine Kühlleistung beinhaltet.

7. Verfahren nach einem der Ansprüche 1 bis 6, **dadurch gekennzeichnet, dass** der bereitgestellte Metallblech-Rohling (11) eine Dicke von weniger als 2 mm, insbesondere weniger als 1 mm hat.

8. Verfahren nach einem der Ansprüche 1 bis 7, **dadurch gekennzeichnet, dass** mehrere Metallblech-Formstücke (30) zu einem Blechstapel (40) zusammengefügt werden.

9. Vorrichtung zum Durchführen des Verfahrens nach Anspruch 1 umfassend eine Laserstrahl-Schneidmaschine mit einer Steuereinheit (21) zum Steuern von Schneidparametern und eine Verschiebeeinrichtung (22), um den Laserstrahl (23) relativ zum Metallblech-Rohling (11) zwecks Herstellung einer Schnittkante verschieben zu können, **dadurch gekennzeichnet, dass** die Steuereinheit (21) ausgebildet ist, um eine dem Metallblech-Formstück (30) entsprechende Kontur zu erzeugen, indem
a) mindestens eine erste Schnittkante am Metallblech-Rohling (11) durch den Laserstrahl mit einem ersten Schneidparametersatz und
b) mindestens eine zweite Schnittkante am Metallblech-Rohling (11) durch den Laserstrahl mit einem zweiten Schneidparametersatz angebracht wird,
c) wobei der erste und zweite Schneidparametersatz voneinander verschieden sind und an der ersten bzw. zweiten Schnittkante einen unterschiedlichen Energieeintrag erzeugen.

10. Steuerungsprogramm-Produkt zum Durchführen des Verfahrens nach Anspruch 1 mit einer Vorrichtung nach Anspruch 9, **dadurch gekennzeichnet, dass** es einen die Schneidparameter der Laserstrahl-Schneidmaschine steuernden ersten Datensatz verarbeitet, um durch den Laserstrahl (23) eine erste Schnittkante an dem Metallblech-Rohling (11) zu bilden, und mindestens einen die Schneidparameter der Laserstrahl-Schneidmaschine steuernden zweiten Datensatz verarbeitet, um durch den Laserstrahl (23) eine zweite Schnittkante am Metallblech-Rohling (11) zu bilden, wobei der erste und zweite Schneidparametersatz voneinander verschieden sind und an der ersten bzw. zweiten Schnittkante einen unterschiedlichen Energieeintrag erzeugen.

11. Metallblech-Formstück (30) hergestellt nach Anspruch 1, mit mindestens einer ersten Schnittkante mit einem ersten veränderten Randbereich und mindestens einer zweiten Schnittkante mit einem zweiten veränderten Randbereich, wobei der erste und der zweite veränderte Randbereich hinsichtlich der elektromagnetischen Materialeigenschaften verschieden sind.
